# EUROPEAN PATENT APPLICATION

(11) **EP 4 793 494 A1**
(43) Date of publication of application: **19.08.2026**
(21) Application number: 25171057.0
(22) Date of filing: 16.04.2025
(51) Int. Cl.: F03D 13/10, F03D 80/00

(54) **DAMPING OF ROTOR BLADE VIBRATIONS**

(30) Priority: 17.02.2025 EP 25158312
(71) Applicant: Siemens Gamesa Renewable Energy A/S, 7330 Brande (DK)
(72) Inventor: Gonzalez, Alejandro Gomez, 8000 Aarhus (DK); Grishauge, Nikolai Bak, 9240 Nibe (DK); Enevoldsen, Peder Bay, 7100 Vejle (DK); Laursen, Jesper Monrad, 8600 Silkeborg (DK); Quistgaard, Morten Rams, 8600 Silkeborg (DK); Canizares Segarra, Juan Jose, 03203 Elche (ES)
(74) Representative: SGRE-Association

(57) **Abstract**

A damping device for a rotor blade of a wind turbine is provided. The damping device is configured to be removably mounted to a leading edge or a trailing edge of the rotor blade to damp vibrations of the rotor blade in a nonoperating condition of the rotor blade. The damping device comprises a body having a first side configured to face the rotor blade, wherein the first side has an interface section having a shape that is adapted to receive the leading edge or the trailing edge, respectively, of the rotor blade. It further comprises a first protruding section configured to protrude from a pressure side of the rotor blade in a direction pointing away from the pressure side when mounted to the rotor blade and a second protruding section configured to protrude from a suction side of the rotor blade in a direction pointing away from the suction side when mounted to the rotor blade.

## Description

### FIELD OF THE INVENTION

The present invention relates to a damping device for a rotor blade of a wind turbine, to a damping assembly, and to a rotor blade comprising such damping device or damping assembly. It further relates to a method of damping vibrations for a rotor blade.

### BACKGROUND

Wind turbines are employed as renewable energy sources. To extract more energy from the wind, larger wind turbines requiring larger blades are being manufactured and installed. Long slender blades may be prone to blade vibrations, such as from VIV (Vortex Induced Vibrations) and SIV (Stall Induced Vibrations). Such vibrations may, in particular, compromise the stability of a rotor blade during the installation phase of a wind turbine. Depending on the wind direction, the orientation of the wind turbine and blades, and the number of blades installed (e.g., one, two, or three), different instability ranges may occur which can trigger for example edgewise oscillations of the rotor blade. These oscillations may result in significant load levels and in extreme cases, the structural integrity of the rotor blade may be compromised.

The problem may be accentuated during the installation phase of a wind turbine. Due to the operation of cranes and the limited amount of control of the turbine, it may not always be possible to orient the wind turbine into a preferred direction with respect to the wind. In particular when the wind comes from the side relative to the orientation of the blades, i.e. at an angle of 90 degrees relative to the yaw direction, or at angles close to +-45 degrees with respect to the yaw direction, a rather unfavorable vibration situation may occur, which may result in the excitation of significant VIV and SIV. In this context, the term yaw direction is understood as the direction in which the axis of rotation of the turbine is pointing towards. For example, when installing blades of a wind turbine using a crane, the wind turbine may not be able to yaw into a position of favorable blade stability with respect to the prevailing wind direction because of the risk of collision with the crane.

The document CN 117552924 A describes a device that is attached to a wind turbine rotor blade to suppress vortex-induced vibrations. The device comprises a cuboid block attached to a rotor blade surface. The document EP 4093963 A1 describes a device with a flexible base that is partly wrapped around the blade and that has a spoiler for damping vibrations. The device has a rather complex structure that may be difficult to manufacture, and the device is not easily installed. The document EP 4 123 162 A1 describes another device for reducing vibrations. However, such device has a rather complex shape and is likewise difficult to install. The document EP 3795824 A1 describes a further apparatus for mitigating vortex-induced vibrations or stall-induced vibrations. This apparatus may be wrapped around the blade. However, the aerodynamic damping provided by this kind of apparatus is rather limited. A wind turbine blade oscillation preventer is described in the document EP 3240952 A1. The preventer is provided in form of a sleeve or bag that is draped over the end of a rotor blade.

Although several solutions exist for vibration damping, they may be complex, difficult to install, and/or provide a rather limited damping. Accordingly, it is desirable to reduce or avoid respective vibrations in a simple and cost-efficient manner. It is desirable to provide a durable and inexpensive damping device that is easy to install and to unmount and that provides efficient vibration damping.

### SUMMARY

There is accordingly a need to mitigate at least some of the drawbacks mentioned above and to provide an improved damping device for a rotor blade that is not in operation, in particular a device that facilitates manufacturing and installation and that provides efficient damping.

This need is met by the features of the independent claims. The dependent claims describe embodiments of the invention.

According to an aspect of the invention, a damping device for a rotor blade of a wind turbine is provided, wherein the damping device is configured to damp vibrations of the rotor blade in a non-operating condition of the rotor blade, in particular in a non-operating condition of the wind turbine, when mounted to the rotor blade.

A non-operating condition of the rotor blade may refer to a condition in which the rotor blade does not rotate as part of the wind turbine rotor to generate electrical power. A non-operating condition of the rotor blade may for example be a condition in which the wind turbine is in standstill or in a park position, a condition in which not all rotor blades have been mounted to the wind turbine rotor, an installation, servicing, commissioning or maintenance situation, a passive or active idle mode, and the like. It is preferably a condition in which the rotor blade is not operated to harvest wind energy.

The damping device is configured to be removably mounted to the leading edge and/or the trailing edge of the rotor blade. It may thus be removed prior to commencement of normal operation, e.g. of power generation, by the wind turbine.

The damping device may comprise a (main) body configured to extend in a longitudinal direction of the rotor blade when mounted to the rotor blade. The body may, in particular, have a longitudinal extension in a longitudinal direction that corresponds to the longitudinal direction of the rotor blade (e.g., spanwise direction) when mounted thereto. The body may have a first side facing the rotor blade, wherein the first side has an interface section having a shape that is adapted to receive the leading edge or the trailing edge of the rotor blade, respectively. The interface section may be configured to rest against the leading edge or the trailing edge, respectively, when the damping device is mounted to the rotor blade. The interface section may for example have a shape that is complementary to a shape of the leading edge or the trailing edge, respectively.

The damping device may have a first protruding section that protrudes from a pressure side of the rotor blade in a direction pointing away from the pressure side when mounted to the rotor blade. The first protruding section may for example extend in a direction pointing away from a local chord direction of the rotor blade at the mounting position of the damping device.

The damping device may further have a second protruding section that protrudes from a suction side of the rotor blade in a direction pointing away from the suction side when mounted to the rotor blade. The second protruding section may for example extend in a direction pointing away from a local chord direction of the rotor blade at the mounting position of the damping device.

A rotor blade generally has an aerodynamic profile (at least in the outboard parts), and differently shaped profiles may be arranged in the longitudinal direction of the rotor blade (also termed airfoils). The chord or chord line may be defined as the line intersecting the two profile points with the largest mutual distance in the profile of the rotor blade. It may in particular be the line from the leading edge to the trailing edge of the profile. The profile may correspond to a cross section of the rotor blade taken substantially perpendicular to the longitudinal direction (or spanwise direction) of the rotor blade.

A device may thus be provided that is easy to install and that provides efficient damping. The protruding sections may efficiently provide aerodynamic spoiling of the airstream passing the blade and may thereby provide aerodynamic damping. Furthermore, by the interface section, the damping device may securely be mounted to the blade, and the mounting may be facilitated. Aerodynamic spoiling may be understood, e.g. as the reduction of vortex generation and/or de-synchronization of vortex shedding so as to reduce vibrations. In technical language this may be referred to as vortex shedding and vortex shedding coherence, respectively.

The damping device may be configured to provide aerodynamic spoiling by increasing turbulence and/or flow separation in a flow around the rotor blade. The damping device may be configured to provide aerodynamic spoiling by reducing a strength of vortices shed from the leading edge or the trailing edge, respectively, of the rotor blade. Further, the damping device may be configured to provide aerodynamic spoiling by reducing or destroying a coherence between periodic flow structures shed at different spanwise positions along the rotor blade. Preferably, the damping device is configured to modify the lift and drag characteristics of the rotor blade in such a way as to generate aerodynamic damping forces which extract energy from the motion of the rotor blade. The damping device may have one or any combination of the above configurations.

It is noted that the shape of the interface section must not fully correspond to the shape of the respective rotor blade edge. For example, the same shape of the interface section may be employed at different longitudinal mounting positions of the device on the rotor blade over which the shape of the respective edge changes. The interface section may have a certain (predetermined) compliance, which may allow the interface section to slightly adapt to the shape of the respective edge.

The longitudinal direction of the damping device may be substantially parallel to a longitudinal direction of the rotor blade when mounted to the rotor blade (deviations may occur due to the change in chord length along the rotor blade). The longitudinal direction of the rotor blade may be substantially perpendicular to a chord direction of the aerodynamic profiles of the rotor blade at the mounting position.

The first and second protruding sections may form part of the (main) body, i.e. the body may include the interface section and the first and second protruding sections; the body may be a single integral piece. The device may thus have a simple shape, and the device may be manufactured easily and cost efficiently.

The first and second protruding sections may extend in the longitudinal direction of the damping device; they may extend over a whole longitudinal extension of the damping device, e.g. between respective longitudinal end faces. Manufacturing may thereby be facilitated.

The damping device may have a profile (or cross section) in a direction perpendicular to the longitudinal direction, wherein the profile remains substantially the same along the longitudinal extension of the body. This may allow manufacturing of the damping device by, e.g., foam cutting or extrusion.

The interface section may be provided as a recess that extends in the longitudinal direction in the first side. For example, the recess may comply with leading edge or trailing edge of the rotor blade, i.e. may be adapted to the respective shape. Secure mounting may thereby be achieved. The first side of the damping device may have a substantially flat shape. The interface section may be formed as a recess in the substantially flat shape.

The first and second protruding sections may protrude in (substantially) opposite directions. They may extend in opposite directions away from the interface section. A compact device that provides improved aerodynamic damping may thereby be obtained.

The first and/or second protruding section may protrude at an angle from the respective pressure side surface or suction side surface of the rotor blade, e.g. at an angle between 30 degrees and 90 degrees (90 degrees may correspond to being perpendicular to the surface), preferably between 60 degrees and 90 degrees. The first and/or second protruding section may be an airflow disturbing section. It should be clear that when the damping device is mounted to the rotor blade, the first and/or second protruding section protrudes outwardly away from the airfoil, i.e. away from the pressure side surface or the suction side surface of the rotor blade.

The first protruding section and the second protruding section do not need to be symmetric; they may extend at different angles and/or may be sized differently.

Preferably, the first protruding section and/or the second protruding section extends in a direction that is (substantially) perpendicular to a chord line of the rotor blade at a mounting position of the damping device. Such configuration may provide an improved aerodynamic spoiling effect. The mounting position may, e.g., be determined by a central position in the longitudinal direction of the damping device, or the chord line may be determined as an average of the chord line over the longitudinal range over which the device extends. The expression 'substantially perpendicular' may comprise an angular deviation that is less than +/- 15 degrees, e.g. less than +/- 10, +/- 5, or +/- 2.5 degrees from perpendicular.

A thickness of the respective protruding section in a direction perpendicular to the first side or side wall may be smaller than a distance by which the respective protruding section protrudes from the surface of the rotor blade.

The first protruding section and/or the second protruding section may have in a cross section taken perpendicular to a longitudinal extension of the damping device, e.g. to the longitudinal direction of the device, a substantially rectangular profile and/or may have at least one or two edges extending substantially parallel to the longitudinal direction and/or may have two side walls and a (substantially planar) end wall defining the shape of the respective protruding section. The two side walls of the respective protruding section may be (substantially) parallel.

The at least one or two edges may be provided on a side of the protrusion facing away from the rotor blade.

The damping device may have an extension in a local chordwise direction of the rotor blade at a mounting position of the damping device that is smaller than an extension of the damping device in a direction perpendicular to the local chordwise direction.

In an embodiment, the first protruding section and the second protruding section protrude in a protrusion direction that is perpendicular to the longitudinal direction of the damping device. The extension of the damping device in the protrusion direction (e.g. between the distant ends of the first and second protruding sections in the protrusion direction) may correspond to between 5% and 50% (preferably between 5% and 20%, 8% and 20%, or 10% and 20%) of a chord length of the rotor blade at a mounting position of the damping device on the rotor blade. Such sizing of the protrusions may provide an efficient damping. Other exemplary ranges of the extension in the protrusion direction are 10%-40% or 20%-40% of the chord length. If the chord length varies at the mounting position (e.g. over the longitudinal extension of the device), the mean chord length may be employed.

The protrusion direction may be a height direction of the damping device. In some examples, the height direction may be (substantially) perpendicular to the chord line of the rotor blade at a mounting position of the damping device on the rotor blade, and/or the height direction may be parallel to first and second side walls of the device. The height direction may for example be perpendicular to a thickness direction that points from the first side to the second side of the damping device. A thickness of the damping device in thickness direction may be chosen in accordance with the structural requirements.

The damping device may further have a thickness direction. The thickness direction may be perpendicular to the longitudinal direction and the height direction. In some examples, the thickness direction may correspond to an insertion direction in which the leading edge or trailing edge, respectively, is inserted into the interface section when the damping device is mounted to the rotor blade.

In another embodiment, the first protruding section and/or the second protruding section may be sized such that when mounted on the rotor blade, the respective protruding section protrudes by a length between 3% and 20%, 5% and 20%, or 5% and 10% of a local chord length of the rotor blade at the mounting position of the damping device from the surface of the rotor blade (e.g. as measured from the surface of the blade in a direction perpendicular to the chord direction). Such sized protrusion may also provide efficient aerodynamic damping.

In an embodiment, the interface section has a depth by which the leading edge or trailing edge, respectively, is received in the damping device. The depth of the interface section may be smaller than a distance by which each of the first and second protruding sections protrudes from the respective pressure side or suction side of the rotor blade when mounted to the rotor blade. A damping device that is compact in thickness direction while still providing efficient aerodynamic spoiling may thereby be provided.

A depth of the interface section may for example be measured perpendicular to an imaginary plane covering the interface section, e.g. the recess; it may easily be measurable in a profile (cross section) of the damping device. An extension of a protruding section away from the blade surface may be measured by measuring a distance of a far end of the protruding section to the blade surface, e.g. of a point furthest away from the blade surface in a direction perpendicular to the blade surface.

In an example, if the interface section is provided as a longitudinal recess in a sidewall on the first side of the damping device, the first and second protruding sections may extend in height direction by a distance that is larger than the depth of the recess. The distance may be measured from an end of the recess in the sidewall (e.g. from a respective edge).

In such configurations, the extension of each of first and second protrusions in the direction perpendicular to the chord line, as measured from surface of the rotor blade, may be larger than the depth of the recess when the device is mounted to the rotor blade. The device may thus extend substantially further outwardly from blade surface than around the blade surface, contrary to prior art devices. A compact and lightweight damping device having good spoiling properties may thereby be obtained.

It should be noted that although the distance by which the protruding section extends in a specified direction may be measured in the respective direction (e.g. in the height direction or perpendicular to the chord line), the shape of the protruding sections may but does not need to extend in the same direction (e.g. the first and/or second protruding section may be inclined, but the distance by which it protrudes may be measured in height direction or perpendicular to the chord line).

The damping device may have a second side configured to face away from the rotor blade when mounted to the rotor blade. The damping device may comprise on the second side a bulge extending in the longitudinal direction and bulging outwardly from the second side. For example, the interface section, in particular a recess, may be arranged in the first side opposite to the bulge on the second side.

The bulge may provide an increased bending stiffness of the damping device in longitudinal direction. It may further facilitate the mounting, as it may provide a supporting point for a mounting arrangement.

The bulge may have in a cross section taken perpendicular to the longitudinal direction a section shaped as a substantially circular section, preferably as a semi-circular section. This may provide a stable structure and facilitate manufacturing; other shapes are, however, conceivable.

When the damping device is mounted to the leading edge or to the trailing edge of the rotor blade, the bulge may be the part of the damping device that protrudes the most beyond the leading edge or the trailing edge, respectively, in a local chordwise direction of the rotor blade at the mounting position of the damping device at the rotor blade. This may facilitate mounting and may provide defined supporting points for the mounting arrangement which may provide a more secure mounting.

The damping device may have a longitudinal shape having a first side wall (on the first side) and a second side wall extending in the longitudinal direction between a first longitudinal end wall and a second longitudinal end wall of the damping device (e.g. an end wall facing a tip of the rotor blade and an end wall facing the rotor blade root when mounted). The first sidewall may be configured to face the rotor blade when mounted to the rotor blade. It may comprise the interface section in form of a recess extending in the longitudinal direction, the recess being configured to receive the leading edge or the trailing edge of the rotor blade, respectively. The second sidewall may be configured to face away from the rotor blade when mounted to the rotor blade. It may optionally comprise the bulge.

Ends of the first and second sidewalls that extend away from the interface section in a height direction that is perpendicular to the longitudinal direction (and optionally perpendicular to the chord line of the blade when mounted) may form the first and second protruding sections. At the protruding sections, the first and second sidewalls may be substantially parallel. In some examples, an extension of each protrusion in the height direction may be larger than a spacing between the side walls in a thickness direction of the damping device (which may be perpendicular to the longitudinal direction and the height direction).

In some embodiments, the first side wall may extend in a direction that is substantially parallel to a direction in which the second side wall extends, or the first sidewall and the second sidewall may be angled with respect to each other with an angle smaller than 20 degrees, preferably smaller than 10 or 5 degrees. The first and second protruding sections on both sides may have a similar thickness.

The first sidewall and/or the second side wall may be substantially flat with the exception of the recess and the bulge, respectively. However, they may have a more complex structure, e.g. angled sections. The desired strength may thereby be provided.

The damping device may have a first lateral wall and a second lateral wall that extend in longitudinal direction between the first sidewall and the second side wall on opposite lateral faces of the damping device. The first and second protrusions may thus have a rectangular shape in cross section and may be provided with edges that extend in longitudinal direction, which may improve the aerodynamic spoiling effect.

The first lateral wall and the second lateral wall may be substantially flat and/or the first lateral wall and the second lateral wall may be substantially parallel.

The damping device may essentially have the shape of a plate that includes on the first side the interface section and on the second side the bulge, wherein the ends of the plate in height direction provide the first and second protruding sections.

The first and the second protruding sections may each have the shape of a spoiler or of a fin that extends in longitudinal direction and that extends away from the pressure side or suction side, respectively, of the rotor blade when the damping device is mounted to the rotor blade. They may extend substantially perpendicular to a chord line of the blade at the mounting position, e.g. within an angular range between +/- 15, 10 or 5 degrees about the perpendicular orientation (90 degrees).

The damping device may comprise one or more mounting points, such as apertures, configured to receive a mounting arrangement for mounting the damping device to the rotor blade. A mounting arrangement may comprise one or more of a mounting strap, band, belt, or cord. The apertures may comprise slits and/or holes.

The one or more mounting points, e.g. apertures, may comprise at least two mounting points (e.g. two apertures) on a side of the damping device that protrudes from a suction side of the rotor blade when mounted to the rotor blade and/or at least two mounting points (e.g. two apertures) on a side of the damping device that protrudes from a pressure side of the rotor blade when mounted to the rotor blade.

In an embodiment, the damping device may comprise one, two or more reinforcement sections configured to reinforce a structure of the damping device, wherein the reinforcement sections are configured for interacting with the mounting arrangement to mount the damping device to the rotor blade. The reinforcing section may be configured to transfer a pressure applied by the mounting arrangement to the reinforcing section to the body of the damping device.

The reinforcement section may be provided on the bulge of the second sidewall and a strap may hold the damping device firmly in place by exerting pressure on bulge. The reinforcement section may protect the bulge.

At least two reinforcement sections may be provided at different longitudinal positions along the length of the damping device, preferably at two different longitudinal positions along the bulge. The reinforcement sections may be aligned with mounting points, e.g. apertures, for mounting a mounting arrangement, e.g. mounting strap, to the damping device.

The body of the damping device may be made of a plastic material or polymer material, such as Polystyrene or Polyethylene. The body may be made of a low-density material.

The body may at least partially be enclosed in a shell, wherein preferably, a rigidity of a material of the shell is higher than a rigidity of the material of the body. The shell material may have a higher hardness and/or may be stiffer than the body material. At least 50%, preferably at least 70% of the surface of the body may be enclosed in the shell. The body may be fully enclosed by the shell. The shell may be provided by a coating on the body. For example, the shell may be made of polyurethane material (PU / PUR).

The damping device may be an aerodynamic spoiler.

The damping device may have a longitudinal extension (in longitudinal direction) in the range of 0.3 m to 3 m, preferably 0.5 m to 2 m, more preferably 0.7 m to 1 m.

According to a further aspect of the invention, a damping assembly comprising one or more, e.g. plural, damping devices having any of the configurations disclosed herein is provided. The assembly further comprises a mounting arrangement configured to mount the one or more, e.g. plural, damping devices to a rotor blade.

The one or more damping devices may comprise a leading edge damping device configured to be mounted to a leading edge of the rotor blade and a trailing edge damping device configured to be mounted to a trailing edge of the rotor blade. Preferably, the trailing edge damping device is configured to be mounted at a longitudinal position of the rotor blade that corresponds to the longitudinal position at which the leading edge damping device is configured to be mounted.

The leading edge damping device may have any damping device configuration described herein, in particular with respect to the mounting on the leading edge, and the trailing edge damping device may have any damping device configuration described herein, in particular with respect to the mounting on the trailing edge. A significant benefit of such configuration may be that efficient aerodynamic damping may be achieved for different wind directions, also if the wind is hitting the blade on the trailing edge.

The mounting arrangement may comprise a mounting strap, band, belt, or cord, the damping assembly being configured to be mounted to the rotor blade by strapping together by the mounting arrangement the leading edge damping device and the trailing edge damping device on opposite sides of the blade in contact with the leading edge and the trailing edge of the blade, respectively. The strapping of the damping assembly may increase friction between the damping assembly and the rotor blade so as to avoid any relative sliding of the damping assembly on the rotor blade.

The one or more damping devices may be mounted to the rotor blade in an airfoil section of the rotor blade, in particular in an outboard section of the rotor blade. For example, they may be configured to be mounted in a longitudinal region larger than 40%L, 50%L, or 60%L, wherein L is the length of the rotor blade and is measured from the blade root. For example, the assembly may comprise plural damping devices configured to be mounted at least in a longitudinal region between 75%L and 85%L of the rotor blade.

The damping assembly may comprise plural pairs of leading edge damping devices and trailing edge damping devices configured to be distributed in a spaced apart arrangement along a longitudinal section of the rotor blade, e.g. in the longitudinal region. Preferably, the damping assembly is configured for being mounted to a predefined rotor blade and the number, spacing, and longitudinal extension of the plural pairs of damping devices is selected such that the plural pairs of damping devices extend over at least 10%, 20%, or 40% of the longitudinal length of the predefined rotor blade.

Alternatively, the damping assembly may comprise plural pairs of leading edge damping devices and trailing edge damping devices that are arranged in longitudinal direction of the blade next to each other so as to form a continuous trailing edge damping device and/or a continuous leading edge damping device. The number and longitudinal extension of the plural pairs of damping devices may be selected such that the plural pairs of damping devices extend over at least 10%, 20%, or 40% of the longitudinal length of the predefined rotor blade.

The assembly may comprise plural damping devices including at least two different leading edge damping devices and/or at least two different trailing edge damping devices configured to be mounted at different longitudinal positions, or within different longitudinal ranges, on the blade, wherein at least a size of the protruding sections of the at least two different damping devices provided for the same edge of the rotor blade differs, preferably in dependence on a chord length at the longitudinal mounting position. For example, two or more damping devices having a similar or the same configuration (e.g. shape) may be provided within each longitudinal range, wherein the damping devices differ from the damping devices provided in another longitudinal range. For example, 2-8, preferably 3-5 (similarly shaped) damping devices may be provided within a longitudinal range.

According to a further aspect of the invention, a rotor blade for a wind turbine is provided, wherein the rotor blade comprises one, two or more damping devices having any of the configurations described herein, the one, two or more damping devices being mounted to a leading edge and/or to a trailing edge of the rotor blade, or wherein the rotor blade comprises a damping assembly having any of the configurations described herein and being mounted to the rotor blade.

The rotor blade may comprise a blade body having the leading edge, a suction side with a suction side surface, a pressure side with a pressure side surface, and the trailing edge.

The blade may have a length L (extension in longitudinal direction) larger than 25 m, 30 m, or 50 m, preferably larger than 80 m.

According to a further aspect of the invention, a method for damping vibrations of a rotor blade is provided, wherein the method comprises mounting one, two or more damping devices having any of the configurations described herein to a leading edge and/or to a trailing edge of the rotor blade or mounting a damping assembly having any of the configurations described herein to the rotor blade.

The rotor blade may be in a non-operational state when the one, two or more damping devices or the damping assembly are/is mounted to the rotor blade and are/is damping vibrations of the rotor blade. For example, the one, two or more damping devices or the damping assembly may be mounted to the rotor blade prior to a lifting operation of the rotor blade by which the rotor blade is to be mounted to a hub of a wind turbine.

The method may further comprise unmounting the one, two or more damping devices or the damping assembly from the rotor blade prior to operating the rotor blade in an operational state in which a wind turbine comprising the rotor blade generates power. The unmounting of the damping devices may occur when the rotor blade is mounted to a hub of a wind turbine.

According to a further aspect of the invention, a method of manufacturing a damping device having any of the configurations described herein is provided. The method may comprise manufacturing the body of the damping device by means of, e.g., foam cutting or extrusion. Optionally, the method may comprise providing the body with a reinforcement layer or shell, in particular by coating the body. The method may further comprise any steps performable to obtain the damping device in any of the disclosed configurations. The method may for example further comprise providing one or more mounting points for receiving a mounting arrangement on the damping device, for example by cutting or otherwise providing one or more respective apertures in the body.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing showing a section of a wind turbine rotor blade including a damping device according to an embodiment.
Fig. 2 is a schematic drawing showing a section of a wind turbine rotor blade and plural differently sized leading edge and trailing edge damping devices according to an embodiment.
Fig. 3 is a schematic drawing showing a cross sectional view of a wind turbine rotor blade and plural differently sized leading edge and trailing edge damping devices according to an embodiment.
Fig. 4 is a schematic drawing showing a perspective view of a damping device according to an embodiment.
Fig. 5 is a schematic drawing showing a top view of two rotor blade sections including damping devices according to an embodiment.
Fig. 6 is a schematic drawing showing a perspective view of two rotor blade sections including damping devices according to an embodiment.
Fig. 7 is a flow diagram illustrating a method according to an embodiment.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a, " "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

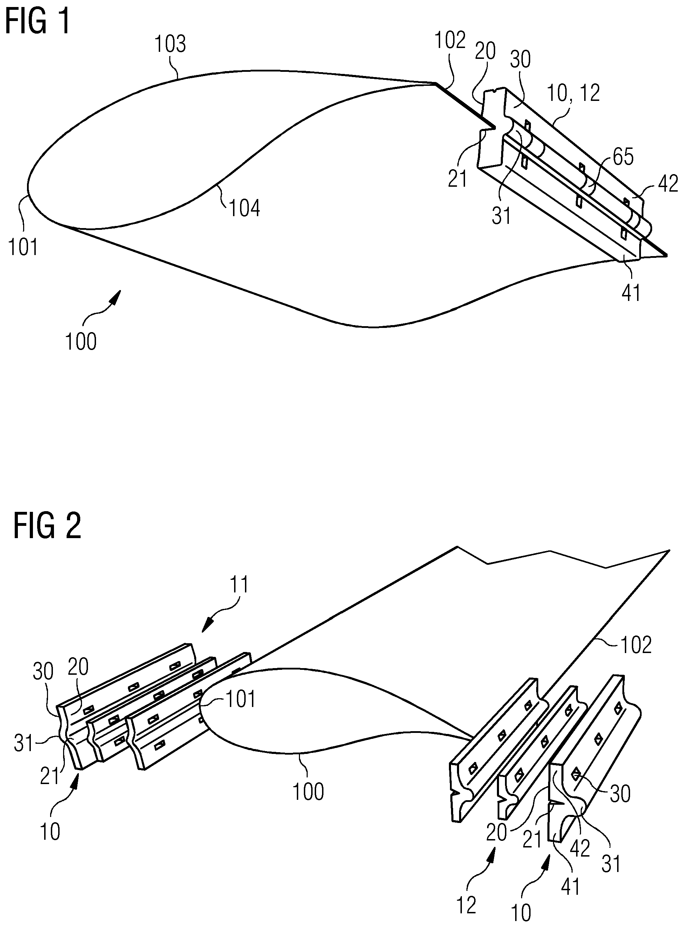

Figure 1 shows a rotor blade 100 with a leading edge 101, a trailing edge 102, a suction side 103 and a pressure side 104. A damping device 10 is provided and configured to be installed on the leading edge 101 of the rotor blade as a leading edge damping device 11 or on the trailing edge 102 of the rotor blade as a trailing edge damping device 12, the latter being shown in figure 1.

In figure 1, to damp blade vibrations, e.g. to reduce oscillations, the damping device 10, e.g. an aerodynamic spoiler device, is installed on the trailing edge 102 of the airfoil sections of the outer portion of the blade, and a respective leading edge damping device may also be installed.

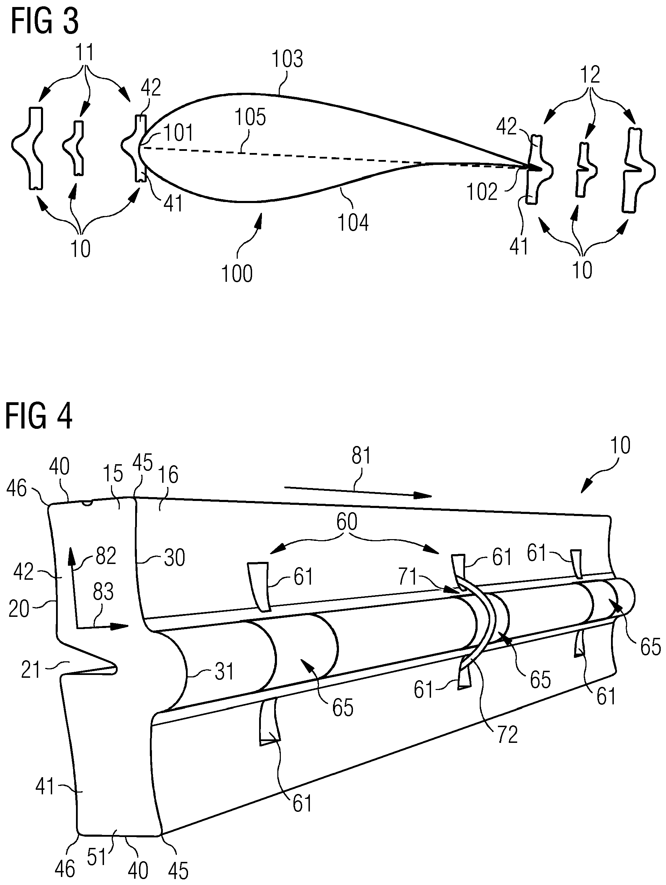

The leading and trailing edge damping devices 11, 12 may have a sizing that scales approximately with the chord length of the rotor blade at the mounting position, meaning that larger devices 10 are mounted on larger airfoil sections, or at least a number of different sizes may be made available in order to size correctly each spanwise location of the blade (see figures 2 and 3). For example, at least the size in height direction 82, and optionally the width in width direction 83 may be adapted to the chord length (figure 4).

The leading edge damping device 11 (figure 2) has an interface section towards the blade 100 having a geometry which complies with the leading edge 101 shape of the blade. It has a first side wall 20 facing the rotor blade. The interface section is provided by a recess 21 adapted to the shape of the leading edge 101. Furthermore, the leading edge damping device 11 has a surface (second side wall 30) that points away from the rotor blade 100, which is provided with a bulge 31 that has a roughly semi-circular shape in cross section in order to increase the bending stiffness of the damping device 10. The recess 21 and the bulge 31 lie on opposite sides (in thickness direction 83) of the damping device, at about the same position in height direction 82 (see also figure 4).

Similarly, the trailing edge damping device 12 has an interface section towards the blade having a geometry which complies with the trailing edge 102 shape of the rotor blade. It has a first side wall 20 facing the rotor blade. The interface section is provided by a recess 21 adapted to the shape of the trailing edge 102 (figures 1, 2 and 4). Furthermore, the trailing edge damping device 12 has a surface (second side wall 30) that points away from the rotor blade 100, which is provided with a bulge 31 that has a roughly semi-circular shape in cross section in order to increase the bending stiffness of the damping device 10.

The leading and trailing edge damping devices 11, 12 may include mounting points 60, for example apertures 61, e.g. slits or holes, as shown in figure 4, allowing them to be interconnected to each other by means of a mounting arrangement 71, e.g. by a tensioning strap 72.

Each of the leading edge and trailing edge damping device 11, 12 may have a height (e.g. an extension in a height direction 82, which may be substantially perpendicular to the chord direction of the rotor blade when mounted to the rotor blade) in the order of magnitude of 5%-50%, preferably 5% to 20%, e.g. 10-20% of the chord length at the mounting position of the damping device. The height may for example be measured in height direction 82 between the upper and lower ends of the damping device, i.e. between the lateral walls 40 (figure 4).

Both the leading edge damping device 11 and the trailing edge damping device 12 may be reinforced at specific locations as shown in exemplary manner for the trailing edge device in figure 1 or more generally in figure 4. The reinforcement may comprise a reinforcement section 65, preferably plural distributed along the longitudinal length of the device 10. The reinforcement section 65 may be provided on the bulge 31. The mounting arrangement 71 may be supported at the reinforcement section 65, e.g. the strap 72 may bear against the reinforcement section 65 when mounted to the blade.

To avoid significant increase in weight of the turbine blades, the damping device 10 may have a pre-cut geometry. Device 10, in particular body 15, may be produced in lightweight material, also referred to as low density material, e.g. a plastic material. For example, it may have a body 15 made of, e.g., Polystyrene (e.g. foamed/expanded Polystyrene) or Polyethylene. To attach this material by the mounting arrangement 71 to the rotor blade 100 and avoid damaging the device material when tightening, the reinforcement section 65 can be provided on the device 10.

The reinforcement section 65 may be provided in the form of a semi-circular cylinder jacket reinforcement section as shown in figure 1 or 4. The reinforcement section 65 can for example be made of a plastic material such as Polyvinyl Chloride (PVC) or any other suitable stiff plastic material.

In order to maintain the integrity of the lightweight material of the body 15, the body 15 may be provided with a shell 16 which may surround the body 15 and may be made of a semi-rigid or slightly flexible material such as polyurethane (PUR). For example, a respective coating may be applied as the shell 16 to the body 15. The PUR coating may work as a stiffening and toughening addition to the original characteristics of the device 10. It may provide the device 10 with a better structural stability. The shell 16 may be combined with the local reinforcement section(s) 65 at the mounting points 71, e.g. strap attachment points. This may provide a robust and resilient design. Examples of the shape and the reinforcement are shown in figures 1 and 4.

Such configuration of the damping device 10 may provide a lightweight design, a higher toughness and resilience compared to pure foam solutions. It may further be easier to apply enough pressure from the mounting arrangement 71, which reduces the risk that a device 10 or a part thereof falls off the rotor blade. By providing a lightweight damping device 10 and further ensuring secure attachment, the risk of a damping device becoming detached and the risk of personal injury, should a person be hit by a falling damping device, can be reduced significantly.

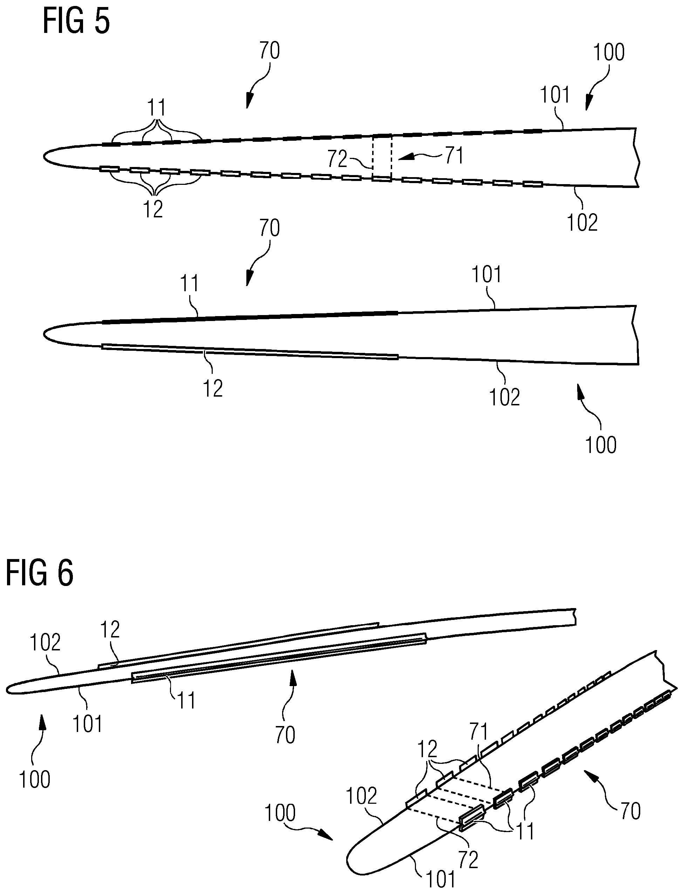

On each of the leading edge and the trailing edge, plural damping devices 10 might be installed contiguous to each other (lower part of figure 5 and upper part of figure 6) or with a spacing in between neighbouring devices, as shown in the upper part of figure 5 and the lower part of figure 6. Each damping device may have a total length (in longitudinal direction) between 0.3 and 3 m, preferably between 0.5 m and 2 m, or 0.7 m and 1.2 m, for example about 1 m. Very large pieces may thereby be avoided. This may facilitate mounting of the damping devices to the blade. Further, in view of their longitudinal extension, fewer damping devices are needed to equip a longitudinal range of the blade.

One or more damping devices 10 and the mounting arrangement 71 may form a damping assembly 70. Preferably, the damping assembly 70 comprises at least a leading edge damping device 11, a trailing edge damping device 12, which are configured to be mounted to the opposite edges 101, 102 of the blade at about the same longitudinal position of the blade. The devices 11, 12 may be fixed to the blade 100 by tensioning a strap 72 of the mounting arrangement, which may be led through the apertures 61 and across the reinforcement section 65 (please see figure 4). Thus, the strap can be tensioned without causing damage to the devices 11, 12 while ensuring secure mounting to the rotor blade 100. Further, by mounting leading edge and trailing edge damping devices having a similar shape, it may be ensured that efficient aerodynamic damping is provided for different directions of the wind hitting the blade.

The leading edge and trailing edge damping devices 11, 12 may form a pair. Figure 3 shows different sizing of pairs of damping devices. The size of the damping device for a particular mounting position in longitudinal direction of the blade may be chosen in dependence on the chord length at the mounting position. For example, the extension of the damping device 10 in height direction 82 (i.e. the height) may be chosen to lie within a range of 5% to 20% of the chord length c, e.g. 5%c to 20%c. This does not mean that each damping device 10 needs to have a different height, but plural damping devices (e.g., 2-5) having the same height or the same structure may be arranged next to each other over a longitudinal range over which the chord length changes, such that the condition is fulfilled over the longitudinal range (e.g., the height may be 8%c at one end of the range and 10%c at the other end of the range due to the changing chord length). If the condition is no longer fulfilled, then a device of the next size (e.g. one step smaller) may be employed and respective devices of the same size may again be arranged over a respective longitudinal range over which they fulfil the condition. For example, when going from the root towards the tip of the blade, a next smaller damping device may be used once the device height reaches 10%c. The size of the next damping device may be chosen such that the height is again about 8%c (i.e. the device is respectively smaller).

The damping assembly 70 may for example comprise trailing edge damping devices 12 having at least two or three different sizes and leading edge damping devices 11 having at least two or three different sizes. It is further noted that the leading edge and trailing edge damping devices provided at the same longitudinal blade position do not necessarily need to have the same size, e.g. same height, but may be sized differently (e.g. smaller device for the trailing edge). The longitudinal extension (length) of the devices may not be scaled with chord length.

Damping assembly 70 may comprise plural respective pairs of devices 11, 12. They can be distributed lengthwise with a spacing along the rotor blade or they may form continuous spoiler elements, as shown in figures 5 and 6.

Although it is possible to provide a single large damping device 10 for each of the leading edge and trailing edge, the providing of segments (i.e. plural shorter devices 10) is preferred, as it may facilitate the installation.

A further benefit may be that separate leading edge and trailing edge damping devices can be provided, which may include apertures for tensioning straps. The geometry of the damping devices 10 may enhance both the aerodynamic spoiling effect as well as the devices' inherent structural stiffness. Further, the installation procedure is simple and can be carried out efficiently. The solution may result in low cost both for the device itself as well as for the installation procedure.

Figure 4 shows a damping device 10 in detail. Although a trailing edge device is shown, the explanations apply equally to a leading edge damping device. The damping device 10 has a longitudinal extension in the longitudinal direction 81, e.g. between the longitudinal end walls 51. The longitudinal direction 81 may be substantially parallel to the longitudinal direction of the rotor blade (i.e. the spanwise direction) when mounted thereto, as shown in figure 1. The damping device 10 further comprises the first protruding section 41 and the second protruding section 42. These may extend in opposite directions, in particular in the height direction 82. When mounted to the rotor blade, the height direction is preferably substantially perpendicular to the chord line 105 of the rotor blade, as shown in figure 3. Substantially perpendicular means that there can be a deviation such as less than +/- 10 or +/- 5 degrees. Although the protruding sections 41, 42 are shown to extend in opposite directions along the height direction 82, they may in other embodiments extend in different directions (e.g. at different angles to the chord line) and may not extend in opposite directions.

As shown in figures 1 and 3, when the device 10 is mounted to the rotor blade 100, the first protruding section 41 protrudes outwardly from the pressure side 104 of the blade and the second protruding section 42 protrudes outwardly from the suction side 103 of the rotor blade 100.

The first and second protruding sections 41, 42 are formed by the end of the side walls 20, 30 in the height direction, and the respective lateral wall 40. As can be seen, in cross section, the first and second protruding sections 41, 42 thus have a substantially rectangular profile. In particular, edges 45 and 46 are formed that extend in the longitudinal direction 81. It is noted that the edges 45, 46 may be rounded, although it is preferred that they may retain a certain pointedness or sharpness. Such edge may cause a flow separation of an airstream passing the blade, which may significantly increase the aerodynamic damping provided by the damping device 10. In other embodiments, the side walls 20, 30 may not be parallel in the region of the protruding sections 41, 42; for example, they may approach each other to form a single edge, of may have another shape.

The damping device may further extend in a thickness direction 83. Thickness direction 83 may for example correspond to a direction in which the respective edge is received in the interface section, e.g. in the recess 21, and/or may be substantially perpendicular to first or second side wall 20, 30 in a region of one or both protruding sections 41, 42. Thickness direction 83 may be perpendicular to the longitudinal direction 81 and the height direction 82, which may likewise be perpendicular to each other.

The extension of the damping device 10 in thickness direction 83 is smaller than in height direction 82. Thus, a compact device providing high damping efficiency may be obtained. The extension of each protruding section 41, 42 in thickness direction, as measured from the edge of the respective protruding section 41, 42 with the recess 21, is larger than a depth of the recess 21. Thus, the device only covers a small portion of the blade while protruding outwardly from the blade by a significant height, which improves compactness and the spoiling effect. Further, it can be seen that the extension of each protruding section 41, 42 in height direction 82 is larger than the extension of the protruding sections in width direction 83.

As visible in figure 4, the profile of damping device 10 perpendicular to the longitudinal direction 81, in particular of the body 15, is substantially the same along the longitudinal extension thereof, i.e. at different positions in the longitudinal direction 81. Exceptions are only the mounting features of the damping device, in particular the mounting apertures 61. They do however not affect the general outline of the profile. This allows manufacturing of the damping device 10, in particular of body 15, by simple methods, such as foam cutting or extrusion.

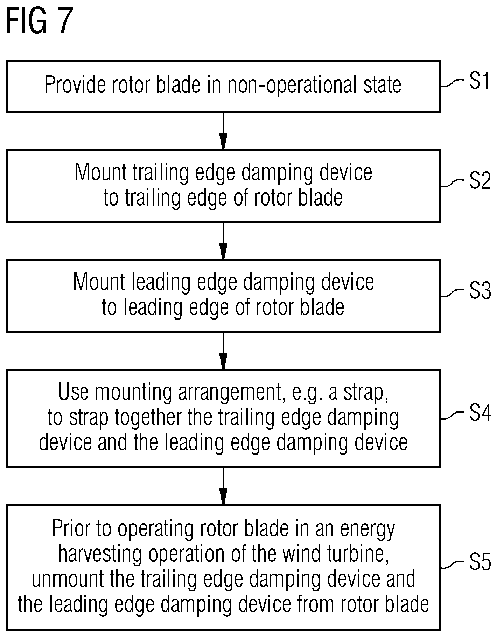

Figure 7 shows a flow diagram of a method that may be carried out for mounting and unmounting damping devices 10 according to an embodiment. In step S1, rotor blade 100 is provided in non-operational state, e.g. it may be provided during an installation procedure, it may be provided on the rotor in an idle state or parking position of the wind turbine etc. In step S2, a trailing edge damping device 12 is mounted to the trailing edge of rotor blade. In step S3, a leading edge damping device 11 is mounted to the leading edge of rotor blade. In step S4, the mounting arrangement 71, e.g. a strap 72, is used to strap together the trailing edge damping device and the leading edge damping device, for example by leading the strap 72 through apertures 61 and across the reinforcement sections 65 on the leading and trailing edge damping devices. Plural further pairs of damping devices 10 may further be mounted to the rotor blade in a corresponding manner.

In such state, the rotor blade may efficiently be protected against excessive vibrations and oscillation. The blade may in such protected state be mounted to a hub of the wind turbine. In step S5, prior to operating rotor blade in an energy harvesting operation of the wind turbine, the trailing edge damping device(s) and the leading edge damping device(s) are unmounted from the rotor blade. These are accordingly not used during normal operation of the wind turbine. It should be clear that the order of the steps of the method can be changed (e.g. order of steps S2 and S3) and that some steps of the method are optional.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

### List of reference signs:

- 10: damping device
- 11: leading edge damping device
- 12: trailing edge damping device
- 15: body of damping device
- 16: shell of damping device
- 20: first side wall on first side
- 21: recess
- 30: second side wall
- 31: bulge
- 40: lateral wall
- 41: first protruding section
- 42: second protruding section
- 45: first edge
- 46: second edge
- 51: longitudinal end wall
- 60: mounting point
- 61: aperture
- 65: reinforcement section
- 70: damping assembly
- 71: mounting arrangement
- 72: strap
- 81: longitudinal direction
- 82: height direction
- 83: thickness direction
- 100: rotor blade
- 101: leading edge of rotor blade
- 102: trailing edge of rotor blade
- 103: suction side of rotor blade
- 104: pressure side of rotor blade
- 105: chord line of rotor blade profile

## Claims

1. A damping device for a rotor blade of a wind turbine, wherein the damping device is configured to be removably mounted to a leading edge or a trailing edge of the rotor blade to damp vibrations of the rotor blade in a non-operating condition of the rotor blade, wherein the damping device comprises:
- a body having a longitudinal extension in a longitudinal direction, the longitudinal extension corresponding to a longitudinal direction of the rotor blade when the damping device is mounted to the rotor blade, wherein the body has a first side configured to face the rotor blade, wherein the first side has an interface section having a shape that is adapted to receive the leading edge or the trailing edge, respectively, of the rotor blade;
- a first protruding section configured to protrude from a pressure side of the rotor blade in a direction pointing away from the pressure side when mounted to the rotor blade; and
- a second protruding section configured to protrude from a suction side of the rotor blade in a direction pointing away from the suction side when mounted to the rotor blade.

2. The damping device according to claim 1, wherein the first and second protruding sections are configured to provide aerodynamic spoiling of an airstream passing the rotor blade.

3. The damping device according to claim 1 or 2, wherein the first and second protruding sections protrude in substantially opposite directions, wherein the first and second protruding sections preferably extend in opposite directions away from the interface section.

4. The damping device according to any of the preceding claims, wherein the first side of the damping device has a substantially flat shape, wherein the interface section is formed as a recess in the substantially flat shape.

5. The damping device according to any of the preceding claims, wherein the first protruding section extends in a direction pointing away from a local chord direction of the rotor blade at a mounting position of the damping device, and/or wherein the second protruding section extends in a direction pointing away from a local chord direction of the rotor blade at the mounting position of the damping device.

6. The damping device according to any of the preceding claims, wherein the first protruding section and/or the second protruding section has in a cross section taken perpendicular to the longitudinal direction a substantially rectangular profile and/or has at least one or two edges on a side of the protruding section facing away from the rotor blade, the at least one or two edges extending substantially parallel to the longitudinal direction and/or has two side walls and an end wall defining the shape of the respective protruding section.

7. The damping device according to any of the preceding claims, wherein the first protruding section and the second protruding section protrude in a protrusion direction that is perpendicular to the longitudinal direction of the damping device, wherein the extension of the damping device in the protrusion direction corresponds to between 5% and 50% of a chord length of the rotor blade at a mounting position of the damping device on the rotor blade.

8. The damping device according to any of the preceding claims, wherein the interface section has a depth by which the leading edge or trailing edge, respectively, is received in the damping device, wherein the depth of the interface section is smaller than a distance by which each of the first and second protruding sections protrudes from the respective pressure side or suction side of the rotor blade when mounted to the rotor blade.

9. The damping device according to any of the preceding claims, wherein the damping device has a second side configured to face away from the rotor blade when mounted to the rotor blade, wherein the damping device comprises on the second side a bulge extending in the longitudinal direction and bulging outwardly from the second side, wherein preferably, the interface section, in particular a recess, is arranged in the first side opposite to the bulge on the second side.

10. The damping device according to any of the preceding claims, wherein the damping device has on the first side a first side wall and has on a second side facing away from the rotor blade when mounted to the rotor blade a second side wall, wherein the first and second sidewalls extend in the longitudinal direction between a first longitudinal end wall and a second longitudinal end wall, wherein the interface section is provided in the first side wall, and wherein ends of the first and second sidewalls that extend away from the interface section in a height direction that is perpendicular to the longitudinal direction form the first and second protruding sections.

11. The damping device according to any of the preceding claims, wherein the first and second protruding sections each have the shape of a spoiler or of a fin that extends in longitudinal direction and that extends away from the pressure side or suction side, respectively, of the rotor blade when mounted to the rotor blade.

12. The damping device according to any of the preceding claims, wherein the damping device comprises one or more mounting points, such as apertures, configured to receive a mounting arrangement, in particular a mounting strap, band, belt, or cord, for mounting the damping device to the rotor blade, wherein the damping device preferably further comprises one or more reinforcement sections configured to reinforce a structure of the damping device, wherein the reinforcement sections are configured for interacting with the mounting arrangement.

13. A damping assembly comprising plural damping devices according to any of the preceding claims, wherein the plural damping devices comprise at least a leading edge damping device configured to be mounted to a leading edge of the rotor blade and a trailing edge damping device configured to be mounted to a trailing edge of the rotor blade, and wherein the damping assembly further comprises a mounting arrangement configured to mount the damping devices to the rotor blade.

14. A rotor blade for a wind turbine, wherein the rotor blade comprises one, two or more damping devices according to any of claims 1-12 mounted to a leading edge and/or to a trailing edge of the rotor blade, or wherein the rotor blade comprises a damping assembly according to claim 13 mounted to the rotor blade.

15. A method for damping vibrations of a rotor blade, wherein the method comprises mounting one, two or more damping devices according to any of claims 1-12 to a leading edge and/or to a trailing edge of the rotor blade or mounting a damping assembly according to claim 13 to the rotor blade.
